# EUROPEAN PATENT SPECIFICATION

(11) **EP 4 252 526 B1**
(45) Date of publication and mention of the grant of the patent: **31.07.2024**
(21) Application number: 23162379.4
(22) Date of filing: 16.03.2023
(51) Int. Cl.: A01G 25/00, B25H 3/00, B65H 75/36, B25H 3/02

(54) **CONTAINER FOR AT LEAST ONE GARDENING TOOL AND RELATED GARDENING KIT**
BEHÄLTER FÜR MINDESTENS EIN GARTENWERKZEUG UND ENTSPRECHENDES GARTENBAUSET.
RÉCIPIENT POUR AU MOINS UN OUTIL DE JARDINAGE ET KIT DE JARDINAGE ASSOCIÉ.

(30) Priority: 28.03.2022 IT 202200006032
(43) Date of publication of application: 04.10.2023
(73) Proprietor: Exel Industries, 51200 Epernay (FR)
(72) Inventor: RIGHI, Cesare Mattia, 41017 RAVARINO (MODENA) (IT)
(74) Representative: Paparo, Aldo

(56) References cited:
- WO-A1-2005/095065
- WO-A1-2013/084239
- FR-A1- 2 845 631
- US-A1- 2007 200 309
- US-A1- 2011 290 827

## Description

The present invention relates to a container for at least one gardening tool and a related gardening kit.

The container and gardening kit find application in the field of hobby and DIY equipment for the maintenance of green areas.

Several tools exist in the state of the art for the care and maintenance of green areas. There are tools such as devices for dispensing water, watering hoses, fittings and/or attachments for the connection, for example, of watering guns to watering hoses.

All these tools, sold individually or in groups, do not have their own place to be stored when not in use. That is, once the use of these devices has ended, the user places them in the most varied places such as in a toolbox, which very often also contains mechanical tools and hardware, or possibly in a corner of the garden so that they are easily available. In the first case, since the spaces of the box are occupied by both gardening tools and mechanic tools and hardware, it is not always easy to find the tools because they are hidden by the others. An example of toolbox is described in WO2013/084239. In the second case, there is a tendency to prefer an open space which however has the disadvantage of being exposed to atmospheric agents which cause a discolouration of the tools up to the real damage thereof.

Moreover, when these devices must be used in a specific area of the garden, the user is forced to go back and forth between the area of the garden on which he is intervening and the area where the tools are stored to pick up the most suitable tool for the activity he is carrying out.

The disadvantages of the prior art are also present in the step of presenting a kit of gardening tools for sale. In fact, with the exception of cases in which the buyer wants a single and specific tool, the promotion of gardening kits has packagings which are expensive, generates waste and are not particularly attractive for sale.

Gardening kits, which often comprise at least one watering gun (or possibly even two guns), a dispensing nozzle (possibly replacing the second gun) and a fitting are generally contained in transparent plastic packagings.

In addition to fulfilling the function of keeping the tools side by side for better display, these packagings must have a minimum rigidity to ensure the protection of the tools from any impact and at the same time ensure a transportability of the kit.

This entails, for a company which produces gardening tools, the obligation to make packagings which affect the final cost of the product to the large-scale retailer and therefore to the final buyer.

Once the product has been purchased, the user opens the packaging, picks up the tools and throws away the packaging. Therefore, the packaging is not perceived by the consumer as a valuable element but only as an element to be lost, and as such, an element which does not in any way affect the final consumer on the purchase of the gardening kit. If the increasingly stringent environmental regulations on the production of plastic waste are then considered, it is immediately understood how the traditional packagings are an element to be avoided or reduced as much as possible. In this context, the technical task at the basis of the present invention is to propose a container for at least one gardening tool and related gardening kit which overcome the aforementioned drawbacks of the prior art.

In particular, it is an object of the present invention to provide a container for at least one gardening tool which can be useful for storing the gardening tools after their use and which is easily transportable.

A further object of the present invention is to provide a gardening kit which can minimise the use of raw materials for the production of the packaging as much as possible, eliminating all the parts of the packaging in plastic. A further object of the present invention is to provide a container for at least one gardening tool and related kit so that they can have a high flexibility of use and which are particularly attractive and functional when sold on the shelves of the large-scale retailer.

The technical task set and the objects specified are substantially attained by a container as defined in independent claim 1 and defining a compartment for containing at least one or more gardening tools having a shelf body adapted to favour a removable connection between one or more tools and the container itself. Furthermore, the technical task set and the objects specified are substantially attained by a container provided with at least one window to facilitate the operations of moving the container and with attachment means to favour the suspended positioning of the container by resting it on a supporting element such as a tap.

Advantageously, the container allows the packaging costs to be reduced since the same container houses all the components constituting the irrigation kit.

Further features and advantages of the present invention will become more apparent from the indicative and thus non-limiting description of an embodiment of a container for at least one gardening tool and related gardening kit comprising the technical features set out in one or more of the appended claims.

The dependent claims correspond to possible embodiments of the invention.

Such a description will be set out below with reference to the appended drawings, which are provided solely for illustrative and therefore non-limiting purposes, in which:
- figure 1A is an axonometric view of a container for at least one tool in accordance with a first possible embodiment of the present invention;
- figure 1B is an axonometric view of a container for at least one tool in accordance with a second possible embodiment of the present invention;
- figure 1C is an axonometric view of a container for at least one tool in accordance with a third possible embodiment of the present invention;
- figure 2 is a plan view of the container of figure 1A;
- figure 3A is a sectional view, according to the plane III-III of figure 2, illustrating the container in a first mode of use in which the container can be placed in a suspended position;

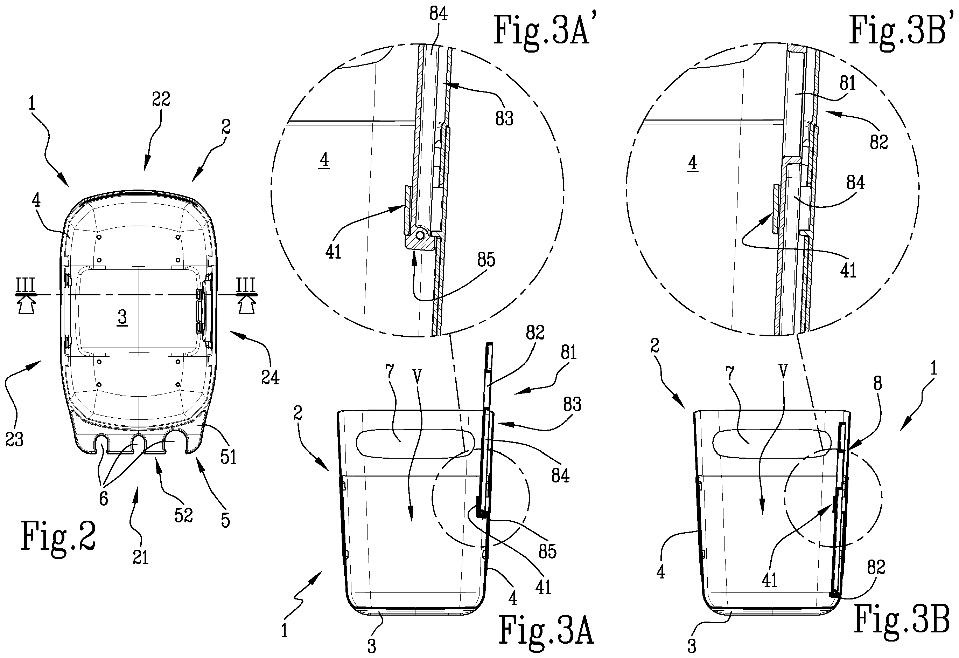

- figure 3A' is an enlarged view of figure 3A illustrating a construction detail of the container;
- figure 3B is a sectional view, according to the plane III-III of figure 2 illustrating the container in a second mode of use in which the container can be supported on a support surface;
- figure 3B' is an enlarged view of figure 3B illustrating a construction detail of the container;

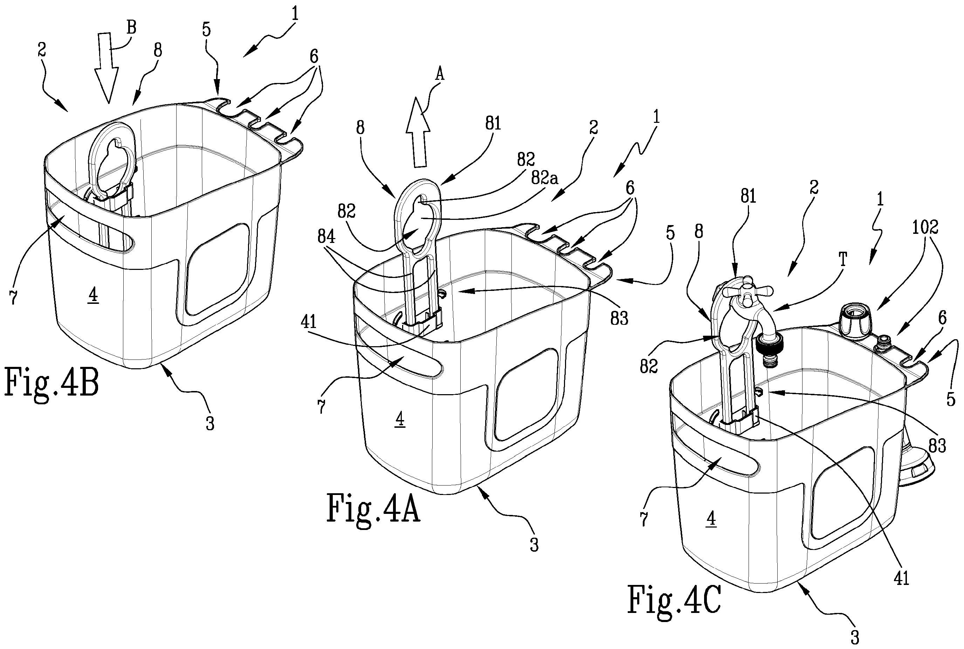

- figure 4A illustrates in axonometric view the container of the first mode of use illustrated in figure 3A;
- figure 4B illustrates in axonometric view the container in the second mode of use illustrated in figure 4B;
- figure 4C shows an example of application of the container 1 in the second mode of use;

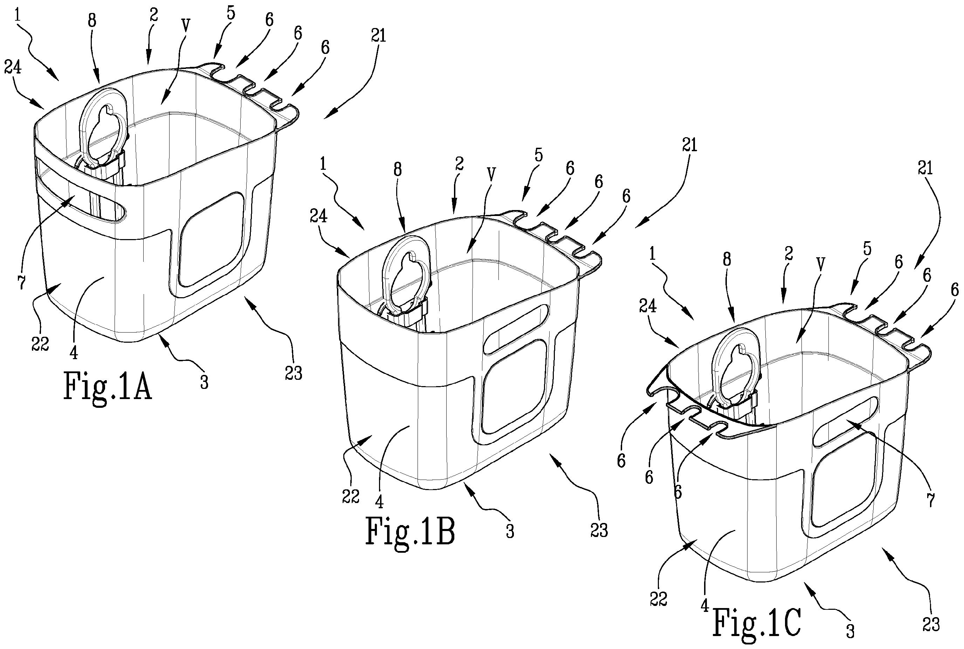

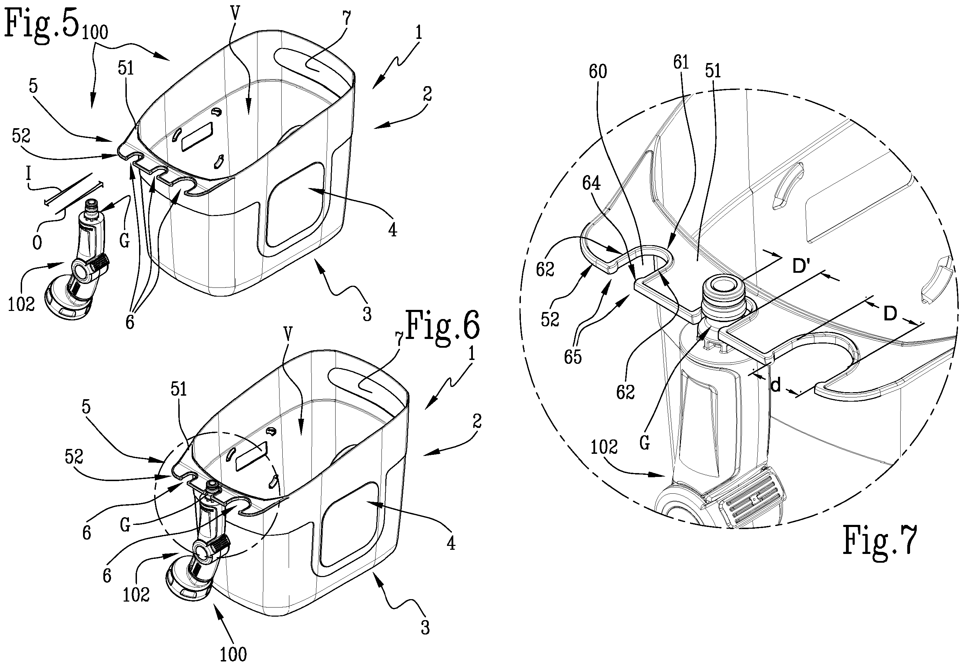

- figure 5 illustrates in axonometric view a gardening kit comprising the container of figures 1A-4B and a gardening tool depicted in a decoupled configuration;
- figure 6 illustrates in axonometric view the kit of figure 5 in a configuration in which gardening tool and container are in the coupled configuration;
- figure 7 illustrates in enlarged axonometric view a construction detail and coupling between container and gardening tool illustrated in figure 6.

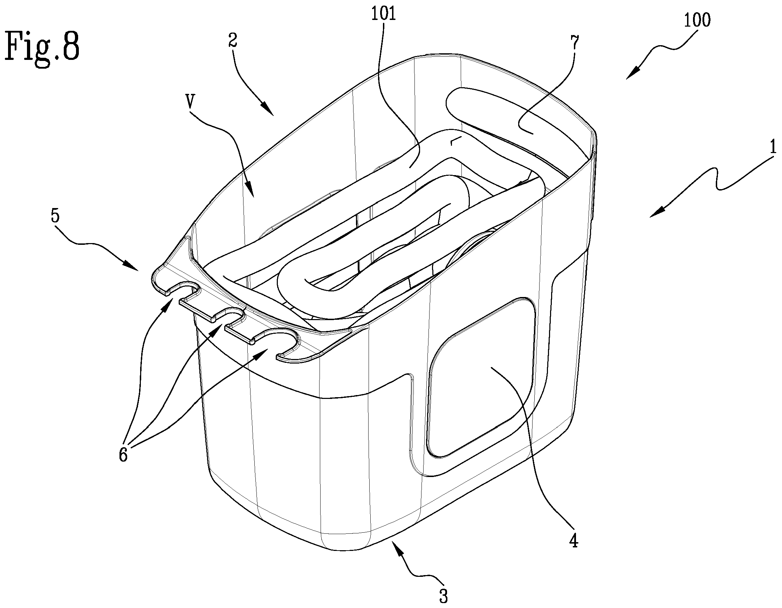

- figure 8 illustrates in axonometric view the gardening kit containing an irrigation hose.

With reference to the cited figures, the number 1 overall indicates a container for at least one gardening tool 102 and the number 100 indicates a gardening kit comprising the aforementioned container 1.

By gardening tool 102 it is meant, by way of non-limiting example, a tool which can be used to dispense water, such as an irrigation gun, a sprinkler or a spray nozzle, or a fitting, i.e., an element for connecting the aforementioned tools together.

Further, gardening tool 102 means manual tools used for the care of green areas, such as shovels, rakes, or other.

Almost all of the gardening tools mentioned have a connecting section provided with at least one cylindrical portion G.

Referring, for example, to irrigation guns, dispensing attachments, spray nozzles and fittings, these, which can be joined in the category of gardening tools 102, have a discharge groove, defined precisely by a cylindrical portion G, which allows a quick attachment with other tools.

Irrigation hoses can also fall into the category of gardening tools, but due to the fact that they can be connected and/or contained in the container, they will simply be referred to as watering or irrigation hoses 101.

The fact remains that the irrigation hoses 101 also have a cylindrical outer surface, similarly defining the aforementioned cylindrical portion G. Functions and couplings of gardening tools 102, and irrigation hoses 101 will be better described hereinafter.

The container 1 comprises a box-shaped body 2 defining a compartment V therein to allow the housing of at least one tool 102 inside the aforesaid compartment V or to allow the extraction of at least one tool 102 from the inside of said compartment V.

The box-shaped body 2 has a substantially flat bottom 3 at the base. As can be seen from the accompanying figures, the bottom 3 preferably has a quadrangular contour with rounded edges. Without departing from the scope of protection of the present invention, the bottom 3 can have a polygonal contour or an arched contour.

Said bottom 3 delimits the compartment V of the container 1 below.

At least one perimetral wall 4, preferably having a closed contour in transverse section, extends away from the bottom 3. That is, the closed contour of the transverse section of the at least one perimetral wall 4 has a contour substantially similar to that of the bottom 3.

As visible from the accompanying figures, said at least one wall 4 peripherally surrounds the bottom 3 so as to laterally delimit the compartment V of the container 1. Without departing from the scope of protection of the present invention, the bottom 3 can be peripherally surrounded by a plurality of side walls 4, parallel to each other and facing in pairs of two, as long as the plurality of side walls 4 define a closed contour in transverse section.

Therefore, the compartment V of the container 1 is laterally delimited by the at least one wall 4, below the bottom 3 and open above. From the open side of the container 2, a user can insert or extract tools into/from the container 1.

Due to the box shape of the container 1, it is possible to identify a first and a second side 21,22, opposite each other and defined respectively by a right side and a left side of the container 1, and a third and a fourth side 23, 24, opposite each other and defined respectively by the front side and rear side of the container 1. As can be seen from the accompanying figures, the first side 21 continues, along the extension of the perimetral wall 4, at opposite ends, with third and fourth sides 23,24 and the latter converge from opposite sides towards the second side 22.

Said box-shaped body 2, preferably at a first side 21, has at least one shelf 5 connected to the perimetral wall 4 and extending away therefrom towards the outside of the box-shaped body 2.

Said at least one shelf 5 is preferably connected to the perimetral wall 4 at a portion thereof which is farther away with respect to the wall of the bottom 3.

That is, said at least one shelf 5 is connected at the open side of the compartment V.

Said shelf 5 is made in a single piece with the perimetral wall 4. That is, the shelf 5 is made with the same material with which the perimetral wall 4 is made.

As can be seen in figures 1A, 1B, the box-shaped body 2 has a shelf 5 at the first side 21, while in figure 1C the box-shaped body has a shelf 5 at the first side 21 and a second shelf 5 at the second side 22.

Without departing from the scope of protection of the present invention, the container 1 can have a plurality of shelves 5 arranged on the periphery of the perimetral wall 4, each extending away from the perimetral wall 4. Further, the box-shaped body 2 can comprise one or more shelves 5 located on the same side or on parallel or contiguous sides of the box-shaped body 2 itself.

Each shelf 5 has an angled extension with respect to the perimetral wall 4. More precisely, each shelf 5 is angled with respect to the perimetral wall 4 with an obtuse angle, preferably a substantially right angle.

Each shelf 5 has a proximal region 51, jointed and connected to the perimetral wall 4 and a distal region 52 which is cantilevered with respect to the perimetral wall 4 as, for example, illustrated in figure 7.

At least one recess 6 is provided at the aforesaid shelf 5. As can be seen in the accompanying figures, the at least one shelf 5 can include a plurality of recesses 6.

Said recess 6 defines a seat for the reversible coupling of at least one gardening tool 102 to the box-shaped body 2 so as to allow a temporary placement during the non-use of the tool itself.

Each recess 6 comprises a bottom portion 61, preferably arched, located near the proximal region 51 of the shelf 5.

The bottom portion 61 continues in its extension, with a pair of intermediate sections 62, facing each other, ending at the distal region 52.

The pair of intermediate sections 62 opens at the distal region 52 defining therein a free space 60 open and accessible from the distal region 52. Looking at the recess 6 from above, it can be noted how this has a U-shaped contour with the connected part defined by the bottom portion 61 and with the part with the parallel sections defined by the pair of intermediate sections 62. The free space 60 open and accessible from the distal region of the shelf 52 is within this U-shaped contour.

On the pair of intermediate sections 62, opposite to the part connected to the bottom portion 61, there are means of restraint 63 adapted to favour a reversible coupling of at least one tool 102 to the box-shaped body 2.

In the step of coupling a tool on the recess 6, the user must push the tool 102, and in particular the cylindrical portion G, until the resistance opposed by the means of restraint 63 is overcome. Once the resistance opposed by the means of restraint 63 has been overcome, the tool 102 enters the free space until it abuttingly reaches the bottom portion 61. Any movement of the container 1 does not affect the tool 102 - recess 6 coupling due to the resistance opposed by the means of restraint 63 which retain the tool 102 in the recess 6.

In the step of uncoupling a tool 102 from the recess 6, the user must pull the tool 102 until again overcoming the resistance opposed by the means of restraint 63. Once the resistance opposed by the means of restraint 63 has been overcome, the tool 102 can be picked up in order to be used.

As can be seen in figures 6 and 7, the coupling of the tool 102 in the recess 6 occurs by placing the tool with a section above the shelf 5 and the remaining section below the same.

In the preferred embodiment, the means of restraint 63 are defined by a pair of teeth 64. Each tooth, belonging to the pair of teeth 64, is positioned on the end part of a corresponding intermediate section, belonging to the pair of intermediate sections 62, being positioned close to the distal region 52 of the shelf 5. Each tooth, belonging to the pair of teeth 64, is facing the reciprocal tooth and extends from a respective intermediate section towards the other intermediate section. Said pair of teeth 64 subtends a first distance d which is less than a second distance D subtended between the pair of intermediate sections 62.

As a result of this difference in distances subtended respectively between pair of teeth 64 and pair of intermediate sections 62, the coupling between tool 102 and recess 6 is of the interference type between pair of teeth 64 and tool 6, during the insertion and extraction of the tool 102 from the recess 6, while it has clearance between pair of intermediate sections 62 and tool 102 when the latter is entirely inserted inside the free space 60.

As can be seen in the accompanying figures, the pair of intermediate sections 62 belonging to each 6 can subtend distances D, D' which are different from each other. This is to allow the possibility of coupling a wider range of tools 102 of various sizes having different diameters of the cylindrical portion G to the container 1.

Said pair of teeth 64 is elastically deformable, reversibly, from a close position, during which the pair of teeth 64 provides a resistance to the insertion of the cylindrical portion G of the tool 102 against the pair of teeth 64 or at the output of the cylindrical portion G of the tool 102 when the same is previously inserted inside the recess 6, at a distanced position, during which the pair of teeth 64 allows the passage of the cylindrical portion G of the tool 102 inside the recess 6.

There is at least one window 7 at the perimetral wall 4, passing through and forming a communication between compartment V and outside the box-shaped body 2. Said at least one window 7 defines a gripping handle for the box-shaped body 2 adapted to favour displacements or transport thereof. As can be seen for example in figure 1A, the window 7 can be obtained on a side, for example the second side 22, opposite the side on which the shelf 5 is applied, for example the first side 21.

As can be seen for example in figure 1B, the window 7 can be obtained on a side, for example the third side 23, adjacent to the side on which the shelf 5 is applied, for example the first side 21.

Further, as can be seen for example in figure 1C, the window 7 can be obtained on a side, for example the third side 23, interposed between a pair of sides, first and second 21,22, on which a pair of shelves 5 is distributed. It remains understood that, without departing from the scope of protection of the present invention, the window 7 is placed on a side of the box-shaped body not engaged by the shelf 5 so as to allow a correct gripping thereof without the opening of the window being partially occluded by a tool 102 coupled to the shelf 5.

To obtain a suspended positioning of the container 1, i.e., in a position where the bottom 3 is not abutted on a support surface, the container 1 includes attachment means 8.

Said attachment means 8 comprise a support 81, having a slot 82, engageable by an element adapted to favour the suspended positioning of the box-shaped body 2, connected below to a sliding element 83 slidably coupled to the perimetral wall 4.

Said sliding element 83 favours a controlled translation reversible from an extended position, in which the support 81 protrudes from the inside of the compartment V, to a shortened position in which the support 81 is at least partially, preferably fully, contained inside the compartment V.

The movement of the sliding element 83 to reach the elongated position occurs due to a distancing thereof from the container 1 according to a direction indicated in figure 4A with A while the movement of the sliding element 83 to reach the shortened position occurs due to an approach thereof to the container according to a direction indicated with figure 4B with B.

Said sliding element 83 comprises a pair of extensions 84 sliding inside a guide 41 obtained on the peripheral wall 4 on the part thereof facing the inside of the compartment V.

Said pair of extensions 81, better depicted in figure 3A, 3A', 3B, 3B', ends, opposite to the part connected to the slot 82, with stop means 85 adapted to enter against the guide 41 upon reaching the elongated position.

As can be seen in figures 3A-3B and 4C, the guide 41 is defined by a flange inside which the pair of extensions 81 can slide. It remains understood that without departing from the scope of protection of the present invention, the guide 41 can be defined by another system, such as a pair of eyelets which allow the sliding of the extensions 84.

Said slot 82 has a main opening 82a surmounted by a top opening 82b, said top opening being engageable with a support element such as a dispensing spout of a tap T.

A further object of the present invention is a gardening kit 100 comprising an irrigation hose 101 of the flexible or self-extending type, at least one gardening tool 102, ending at one end with a connecting section having at least one cylindrical portion G, and a container 1 for receiving the irrigation hose and at least said gardening tool 102.

By gardening tool 102, a tool is meant which is capable of assisting in normal garden activities, including preferably, but not exclusively, the distribution of water and the care of green areas.

To cite some examples, by gardening tool 102 it is meant, by way of non-limiting example, a tool which can be used to dispense water, such as an irrigation gun, a sprinkler or a spray nozzle, or a fitting, i.e., an element for connecting the aforementioned tools together or further an irrigation hose 101.

Further, gardening tool 102 means manual tools used for the care of green areas, such as shovels, rakes, or other.

In a first configuration of use of the kit 100, when the irrigation hose 101 is not used, it can be stored in a rolled-up configuration inside the compartment V and said at least one gardening tool 102, when not used, can be coupled to a corresponding recess 6, made on the shelf 5, to keep the gardening tool 102 connected and visible with respect to the box-shaped body 2.

The coupling of the gardening tool 102 inside the recess 6 and the decoupling of the gardening tool 102 from the recess 6 occurs respectively as a result of a thrust force I or a traction force O applied by an operator on the gardening tool 102.

By applying the thrust force I on the gardening tool 102, when this is placed in contact with the recess 6, an elastic deformation of the pair of teeth 64 is promoted which causes a temporary distancing of the pair of teeth 64 to allow the entry of the cylindrical portion G inside the free space 60, thus allowing the coupling of the gardening tool 102 inside the recess 6.

By applying the traction force O, when the gardening tool 102 is already coupled to the recess 6, an elastic deformation of the pair of teeth 64 is again promoted which causes a temporary distancing of the pair of teeth 64 adapted to allow the release of the cylindrical portion G from the inside of the free space 60 thus allowing the decoupling of the gardening tool 102 from inside the recess 6.

In a second configuration of use, actuated as a result of the different dimensions of the recesses 6, and in particular of the distances D, D' subtended between the pair of intermediate sections 62, it is possible to insert or extract, in the same manner described above, an end section of the irrigation hose 101, coupling the cylindrical portion G of the irrigation hose 101 inside the recess 6 of suitable dimensions to accommodate it. This is actuated to immediately make available and visible a termination of the irrigation hose 101 which should be connected to a supply source.

In a third configuration of use, illustrated in figure 8, the irrigation hose 101 can be wound on itself and inserted inside the container 1.

The present invention achieves the proposed objects by making a container 1 for at least one gardening tool 102, preferably for several gardening tools, which allows to keep the at least one gardening tool 102 in order and visible. Advantageously, the present invention allows to collect an irrigation hose 101 and gardening tools 102 inside the compartment V of the container 1 and/or in connection with the container 1 in a single place, allowing the user to have a single containment space of the equipment for the maintenance of green areas.

The provision of at least one window 7 on the perimetral wall 4 allows to easily transport and/or move the container 1 to any place of shelter or maintenance of the green area.

The provision of the attachment means 8 then allows the possibility of connecting the container 1 in a suspended position on support structures, such as a tap, without therefore needing to install shelves or other equipment for supporting the container 1. The fact that the aforesaid attachment means 8 are retractable in a shortened position then allows, if there is no need to place the container in a suspended position, to store the attachment means 8 inside the compartment V without taking up useful space which can be occupied by the gardening tools 102 or the irrigation hose 101.

With particular reference then to the connection between the container 1 and the gardening tool 102, and in particular the connection between the latter and the shelf 5, the present invention allows the visible containment of the gardening tools 120, allowing the user to immediately see the tools available.

Advantageously, the gardening kit 100 allows to provide an assembly for displaying a set of gardening tools, minimising the material for creating the packaging.

Advantageously, the gardening kit 100, in addition to being attractive during display on the shelves of the large-scale retailer, is particularly attractive to the buyer for the fact of buying together the gardening tools and the necessary container, which can be useful for other functions such as the containment of soil, or small clippings during pruning operations.

The scope of protection of the present invention is defined in the appended claims.

## Claims

1. A container (1), for at least one gardening tool (102), comprising:
- a box-shaped body (2) having a bottom (3) and at least one perimetral wall (4), said perimetral wall (4) being connected to the bottom (3) and extending away from the bottom (3); said perimetral wall (4) defining a compartment (V) therein for the containment of at least one gardening tool (102), delimited below by the bottom (3) and open above;
said box-shaped body (2) has, on a first side (21), at least one shelf (5), connected to the perimetral wall (4) and extending away therefrom towards the outside of the box-shaped body (2), comprising at least one recess (6) defining a seat for the reversible coupling of at least one gardening tool (102) to the box-shaped body (2) to allow a temporary placement of the accessory during the non-use thereof;
- means of attachment (8);
**characterised in that** said means of attachment (8) comprise:
- a support (81) having a through-slot (82) engageable by an element passing through the slot to promote a suspended position of the box-shaped body (2) to the element; said suspended position being implemented with the bottom (3) lacking a support on an abutment surface;
- a sliding element (83), slidably coupled to the perimetral wall (4), from an extended position, in which the support (81) protrudes from the inside of the compartment (V) to a contracted position, in which the support (81) is at least partially, preferably fully, contained inside the compartment (V).

2. The container (1) according to claim 1, **characterised in that** said shelf (5), preferably made in a single piece with the perimetral wall (4), comprises a proximal region (51), jointed and connected to the perimetral wall (4), and a distal region (52), cantilevered with respect to the perimetral wall (4).

3. The container (1) according to claim 2, **characterised in that** the said recess (6) comprises:
- a bottom portion (61), preferably arched, located near the proximal region (51);
- a pair of intermediate sections (62), facing each other, extending from the bottom portion (61) up to the distal region (52); said pair of intermediate sections (62) defining a free space (60) therein which is open and accessible from the distal region (52);
- means of restraint (63) adapted to favour a reversible coupling of at least one gardening tool (102) to the box-shaped body (2) placing the accessory with a portion above the shelf (5) and with a portion below the shelf (5).

4. The container (1) according to claim 3, **characterised in that** said means of restraint (63) are defined by a pair of teeth (64), each tooth (64) being connected to a respective intermediate section (62), elastically reversibly deformable, as a result of the insertion of a cylindrical portion (G) of the gardening tool (102) placed against the pair of teeth (64), from a close position, during which the pair of teeth (64) provides a resistance to the insertion of the cylindrical portion (G) of the tool or at the output of the cylindrical portion (G) of the tool when the latter is coupled inside the recess (6), in a spaced position, during which the pair of teeth (64) allows the passage of the cylindrical portion (G) of the gardening tool (102) inside the recess (6).

5. The container (1) according to claim 4, **characterised in that** said pair of teeth (64) subtends a first distance (d) therebetween and said pair of intermediate sections (62), subtends therebetween a second distance (D); said second distance (D) being greater than the first distance (d).

6. The container (1) according to any one of the preceding claims, **characterised in that** the said shelf (5) comprises a plurality of recesses (6).

7. The container (1) according to any one of the preceding claims, **characterised in that** the said box-shaped body (2) comprises a plurality of
shelves (5) located on a first side (21) or distributed on the sides of the box-shaped body (2) adjacent or parallel to each other.

8. The container (1) according to any one of the preceding claims, **characterised in that** it also comprises at least one window (7), obtained from the perimetral wall (4) and passing through it to define an access area between the inside and the outside of the box-shaped body (2), adapted to define a gripping means of the box-shaped body (2) for transporting or moving it.

9. The container (1) according to claims 1 and 8, wherein at least one window (7) is located on a second side (22) of the box-shaped body (2); said second side (22) being opposite the first side (21) on which the shelf (5) is applied.

10. The container (1) according to claim 1, **characterised in that** it also comprises at least one window (7), obtained on the perimetral wall (4) and passing through it to define an access area between the inside and the outside of the box-shaped body (2), adapted to define a gripping means on the box-shaped body (2) for transporting or moving it; said at least one window (7) being located on a third side (23) of the box-shaped body (2); said third side (23) being adjacent to the first side (21) on which the shelf (5) is applied.

11. The container (1) according to claim 1, wherein said slot (82) has a main opening (82a) surmounted by a top opening (82b); said top opening (82b) being engageable in support on a spout of a tap (T).

12. A gardening kit (100) of the type comprising:
- a container (1) according to any one of claims 1 to 11;
- at least one gardening tool (102) terminating at one end with a coupling fitting having at least one cylindrical portion (G); **characterised in that** said at least one gardening tool (102), when not in use, is coupled to said at least one recess (6) in order to maintain said at least one gardening tool (102) connected to the box-shaped body (2).

13. The gardening kit (100) according to claim 12, **characterised in that** said at least one gardening tool (102) being couplable and decouplable from the respective recess (6) as a result of a corresponding thrust force (I) or traction force (O) applied by an operator on the gardening tool (102); said thrust force (I) promoting an elastic deformation on the pair of teeth (64) adapted to allow a temporary distancing of the pair of teeth (64) to allow the entrance of the cylindrical portion (G) inside the free space (60) and the subsequent coupling of the gardening tool (102) inside the recess (6); said traction force (O) promoting an elastic deformation on the pair of teeth (64) adapted to allow a temporary distancing of the pair of teeth (64) in order to allow the output of the cylindrical portion (G) from the outside of the free space (60) and the subsequent decoupling of the gardening tool (102) outside the recess (6).

14. The gardening kit (100) according to claim 12, **characterised in that** it also comprises a flexible irrigation hose (101), stored at least partially, when not in use, in a rolled-up configuration in the compartment (V) defined inside the box-shaped body (2).

15. The gardening kit (100) according to claim 14, **characterised in that** said irrigation hose (101) can have a cylindrical portion (G) at one end which can be coupled inside a recess (6) so as to make the aforesaid end usable to facilitate the retrieval and subsequent connection thereof to a source of supply liquids.

## Patentansprüche

1. Behälter (1) für mindestens ein Gartenwerkzeug (102), umfassend:
- einen kastenförmigen Körper (2) mit einem Boden (3) und mindestens einer Umfangswand (4), wobei die Umfangswand (4) mit dem Boden (3) verbunden ist und sich von dem Boden (3) wegführend erstreckt; wobei die Umfangswand (4) darin eine Unterteilung (V) darin zur Aufnahme mindestens eines Gartenwerkzeugs (102) definiert, das unten durch den Boden (3) begrenzt und oben offen ist;
wobei der kastenförmige Körper (2) an einer ersten Seite (21) mindestens eine Ablage (5) aufweist, die mit der Umfangswand (4) verbunden ist und sich von dieser wegführend zur Außenseite des kastenförmigen Körpers (2) erstreckt, umfassend mindestens eine Aussparung (6), die einen Sitz zum reversiblen Koppeln mindestens eines Gartenwerkzeugs (102) mit dem kastenförmigen Körper (2) definiert, um eine vorübergehende Platzierung des Zubehörs während dessen Nichtbenutzung zu ermöglichen;
- Anbringungsmittel (8);
**dadurch gekennzeichnet, dass** die Anbringungsmittel (8) umfassen:
- eine Stütze (81) mit einem durchgehenden Schlitz (82), in den ein Element eingreifen kann, das durch den Schlitz hindurchgeht, um eine hängende Position des kastenförmigen Körpers (2) an dem Element zu fördern; wobei die hängende Position so implementiert ist, dass der Boden (3) keine Stütze an einer Anlageoberfläche aufweist;
- ein Gleitelement (83), das gleitend an die Umfangswand (4) gekoppelt ist, aus einer ausgefahrenen Position, in der die Stütze (81) aus dem Inneren der Unterteilung (V) herausragt, in eine zusammengezogene Position, in der die Stütze (81) zumindest teilweise, vorzugsweise vollständig, innerhalb der Unterteilung (V) enthalten ist.

2. Behälter (1) nach Anspruch 1, **dadurch gekennzeichnet, dass** die Ablage (5), die vorzugsweise einstückig mit der Umfangswand (4) ausgebildet ist, eine proximale Region (51), die mit der Umfangswand (4) zusammengefügt und verbunden ist, und eine distale Region (52) umfasst, die in Bezug auf die Umfangswand (4) freitragend ist.

3. Behälter (1) nach Anspruch 2, **dadurch gekennzeichnet, dass** die Aussparung (6) umfasst:
- einen Bodenabschnitt (61), vorzugsweise gewölbt, der sich in der Nähe der proximalen Region (51) befindet;
- ein Paar von Zwischenteilstücken (62), die einander zugewandt sind und sich von dem Bodenabschnitt (61) bis zu der distalen Region (52) erstrecken; wobei das Paar von Zwischenteilstücken (62) einen freien Raum (60) darin definiert, der offen und von der distalen Region (52) zugänglich ist;
- Rückhaltemittel (63), die angepasst sind, um eine reversible Kopplung von mindestens einem Gartenwerkzeug (102) mit dem kastenförmigen Körper (2) zu begünstigen, wobei das Zubehör mit einem Abschnitt über der Ablage (5) und mit einem Abschnitt unter der Ablage (5) platziert wird.

4. Behälter (1) nach Anspruch 3, **dadurch gekennzeichnet, dass** die Rückhaltemittel (63) durch ein Paar von Zähnen (64) definiert sind, wobei ein jeder Zahn (64) mit einem jeweiligen Zwischenteilstück (62) verbunden ist, elastisch reversibel verformbar, infolge des Einsetzens eines zylindrischen Abschnitts (G) des Gartenwerkzeugs (102), der gegen das Paar von Zähnen (64) platziert ist, aus einer angenäherten Position, während der das Paar von Zähnen (64) einen Widerstand gegen das Einsetzen des zylindrischen Abschnitts (G) des Werkzeugs bereitstellt, oder am Ausgang des zylindrischen Abschnitts (G) des Werkzeugs, wenn dieses innerhalb der Aussparung (6) gekoppelt ist, in einer beabstandeten Position, während der das Paar von Zähnen (64) den Durchgang des zylindrischen Abschnitts (G) des Gartenwerkzeugs (102) innerhalb der Aussparung (6) ermöglicht.

5. Behälter (1) nach Anspruch 4, **dadurch gekennzeichnet, dass** das Paar von Zähnen (64) einen ersten Abstand (d) dazwischen begrenzt und das Paar von Zwischenteilstücken (62) einen zweiten Abstand (D) dazwischen begrenzt; wobei der zweite Abstand (D) größer als der erste Abstand (d) ist.

6. Behälter (1) nach einem der vorhergehenden Ansprüche, **dadurch gekennzeichnet, dass** die Ablage (5) eine Vielzahl von Aussparungen (6) umfasst.

7. Behälter (1) nach einem der vorhergehenden Ansprüche, **dadurch gekennzeichnet, dass** der kastenförmige Körper (2) eine Vielzahl von Ablagen (5) umfasst, die auf einer ersten Seite (21) angeordnet oder auf den Seiten des kastenförmigen Körpers (2) benachbart oder parallel zueinander verteilt sind.

8. Behälter (1) nach einem der vorhergehenden Ansprüche, **dadurch gekennzeichnet, dass** er auch mindestens ein Fenster (7) umfasst, das von der Umfangswand (4) erhalten ist und durch diese hindurchgeht, um einen Zugangsbereich zwischen der Innenseite und der Außenseite des kastenförmigen Körpers (2) zu definieren, das angepasst ist, um Greifmittel des kastenförmigen Körpers (2) zum Transportieren oder Bewegen desselben zu definieren.

9. Behälter (1) nach den Ansprüchen 1 und 8, wobei mindestens ein Fenster (7) auf einer zweiten Seite (22) des kastenförmigen Körpers (2) angeordnet ist; wobei die zweite Seite (22) der ersten Seite (21) gegenüberliegt, auf der die Ablage (5) angebracht ist.

10. Behälter (1) nach Anspruch 1, **dadurch gekennzeichnet, dass** er auch mindestens ein Fenster (7) umfasst, das an der Umfangswand (4) erhalten ist und durch diese hindurchgeht, um einen Zugangsbereich zwischen der Innenseite und der Außenseite des kastenförmigen Körpers (2) zu definieren, das angepasst ist, um Greifmittel an dem kastenförmigen Körper (2) zum Transportieren oder Bewegen desselben zu definieren; wobei das mindestens eine Fenster (7) an einer dritten Seite (23) des kastenförmigen Körpers (2) angeordnet ist; wobei die dritte Seite (23) an die erste Seite (21) angrenzt, auf der die Ablage (5) angebracht ist.

11. Behälter (1) nach Anspruch 1, wobei der Schlitz (82) eine Hauptöffnung (82a) aufweist, die von einer oberen Öffnung (82b) überragt wird; wobei die obere Öffnung (82b) in Abstützung an einer Tülle eines Hahns (T) eingreifen kann.

12. Gartenbauset (100) des Typs, umfassend:
- einen Behälter (1) nach einem der Ansprüche 1 bis 11;
- mindestens ein Gartenwerkzeug (102), das an einem Ende mit einer Kupplungsmuffe endet, die mindestens einen zylindrischen Abschnitt (G) aufweist; **dadurch gekennzeichnet, dass** das mindestens eine Gartenwerkzeug (102), wenn es nicht verwendet wird, mit der mindestens einen Aussparung (6) gekoppelt ist, um das mindestens eine Gartenwerkzeug (102) mit dem kastenförmigen Körper (2) verbunden zu halten.

13. Gartenbauset (100) nach Anspruch 12, **dadurch gekennzeichnet, dass** das mindestens eine Gartenwerkzeug (102) infolge einer entsprechenden Schubkraft (I) oder Zugkraft (O), die von einem Bediener auf das Gartenwerkzeug (102) ausgeübt wird, koppelbar mit und von der jeweiligen Aussparung (6) entkoppelbar ist; wobei die Schubkraft (I) eine elastische Verformung an dem Paar von Zähnen (64) fördert, die angepasst ist, um eine vorübergehende Distanzierung des Paars von Zähnen (64) zu ermöglichen, um den Eintritt des zylindrischen Abschnitts (G) in den freien Raum (60) und die anschließende Kopplung des Gartenwerkzeugs (102) in die Aussparung (6) zu ermöglichen; wobei die Zugkraft (O) eine elastische Verformung an dem Paar von Zähnen (64) fördert, die angepasst ist, um eine vorübergehende Distanzierung des Paars von Zähnen (64) zu ermöglichen, um den Austritt des zylindrischen Abschnitts (G) von der Außenseite des freien Raums (60) und die anschließende Entkopplung des Gartenwerkzeugs (102) außerhalb der Aussparung (6) zu ermöglichen.

14. Gartenbauset (100) nach Anspruch 12, **dadurch gekennzeichnet, dass** er auch einen flexiblen Bewässerungsschlauch (101) umfasst, der zumindest teilweise, wenn er nicht verwendet wird, in einer aufgerollten Auslegung in der im Inneren des kastenförmigen Körpers (2) definierten Unterteilung (V) gelagert ist.

15. Gartenbauset (100) nach Anspruch 14, **dadurch gekennzeichnet, dass** der Bewässerungsschlauch (101) an einem Ende einen zylindrischen Abschnitt (G) aufweisen kann, der innerhalb einer Aussparung (6) gekoppelt werden kann, um das vorgenannte Ende nutzbar zu machen, um das Zurückholen und anschließende Verbinden desselben mit einer Quelle von Versorgungsflüssigkeiten zu erleichtern.

## Revendications

1. Récipient (1) pour au moins un outil de jardinage (102), comprenant :
- un corps en forme de boîte (2) comportant un fond (3) et au moins une paroi périmétrale (4), ladite paroi périmétrale (4) étant reliée au fond (3) et s'étendant en s'éloignant du fond (3) ; ladite paroi périmétrale (4) y définissant un compartiment (V) pour la contenance d'au moins un outil de jardinage (102), délimité en bas par le fond (3) et ouvert par le haut ;
ledit corps en forme de boîte (2) comporte, sur un premier côté (21), au moins une tablette (5), reliée à la paroi périmétrale (4) et s'étendant en s'éloignant à partir de celle-ci vers l'extérieur du corps en forme de boîte (2), comprenant au moins un renfoncement (6) définissant un siège pour l'accouplement réversible d'au moins un outil de jardinage (102) au corps en forme de boîte (2) pour permettre un placement temporaire de l'accessoire pendant la non-utilisation de ce dernier ;
- des moyens de fixation (8) ;
**caractérisé en ce que** lesdits moyens de fixation (8) comprennent :
- un support (81) comportant une fente traversante (82) pouvant se mettre en prise avec un élément traversant la fente pour favoriser une position suspendue du corps en forme de boîte (2) à l'élément ; ladite position suspendue étant mise en oeuvre avec le fond (3) dépourvu d'un support sur une surface de butée ;
- un élément coulissant (83), couplé de manière coulissante à la paroi périmétrale (4), d'une position étendue, dans laquelle le support (81) dépasse de l'intérieur du compartiment (V), à une position contractée, dans laquelle le support (81) est au moins partiellement, de préférence entièrement, contenu à l'intérieur du compartiment (V).

2. Récipient (1) selon la revendication 1, **caractérisé en ce que** ladite tablette (5), de préférence réalisée en une seule pièce avec la paroi périmétrale (4), comprend une partie proximale (51), jointe et reliée à la paroi périmétrale (4), et une partie distale (52), en porte-à-faux par rapport à la paroi périmétrale (4).

3. Récipient (1) selon la revendication 2, **caractérisé en ce que** ledit renfoncement (6) comprend :
- une partie inférieure (61), de préférence arquée, située à proximité de la partie proximale (51) ;
- une paire de sections intermédiaires (62), se faisant face, s'étendant de la partie inférieure (61) à la partie distale (52) ; ladite paire de sections intermédiaires (62) définissant un espace libre (60) en son sein qui est ouvert et accessible de la partie distale (52) ;
- des moyens de retenue (63) adaptés pour favoriser un accouplement réversible d'au moins un outil de jardinage (102) au corps en forme de boîte (2) plaçant l'accessoire avec une partie au-dessus de la tablette (5) et avec une partie au-dessous de la tablette (5).

4. Récipient (1) selon la revendication 3, **caractérisé en ce que** lesdits moyens de retenue (63) sont définis par une paire de dents (64), chaque dent (64) étant reliée à une section intermédiaire (62) respective, déformable de manière élastiquement réversible, suite à l'insertion d'une partie cylindrique (G) de l'outil de jardinage (102) placée contre la paire de dents (64), à partir d'une position rapprochée, pendant laquelle la paire de dents (64) oppose une résistance à l'insertion de la partie cylindrique (G) de l'outil ou à la sortie de la partie cylindrique (G) de l'outil lorsque celui-ci est accouplé à l'intérieur du renfoncement (6), dans une position espacée, pendant laquelle la paire de dents (64) permet le passage de la partie cylindrique (G) de l'outil de jardinage (102) à l'intérieur du renfoncement (6).

5. Récipient (1) selon la revendication 4, **caractérisé en ce que** ladite paire de dents (64) sous-tend une première distance (d) entre elles et ladite paire de sections intermédiaires (62), sous-tend entre elles une deuxième distance (D) ; ladite deuxième distance (D) étant supérieure à la première distance (d).

6. Récipient (1) selon l'une quelconque des revendications précédentes, **caractérisé en ce que** ladite tablette (5) comprend une pluralité de renfoncements (6).

7. Récipient (1) selon l'une quelconque des revendications précédentes, **caractérisé en ce que** ledit corps en forme de boîte (2) comprend une pluralité de tablettes (5) situées sur un premier côté (21) ou réparties sur les côtés du corps en forme de boîte (2) adjacents ou parallèles les uns aux autres.

8. Récipient (1) selon l'une quelconque des revendications précédentes, **caractérisé en ce qu'**il comprend également au moins une fenêtre (7), obtenue à partir de la paroi périmétrale (4) et la traversant pour définir une zone d'accès entre l'intérieur et l'extérieur du corps en forme de boîte (2), adaptée pour définir des moyens de préhension du corps en forme de boîte (2) en vue de son transport ou de son déplacement.

9. Récipient (1) selon les revendications 1 et 8, dans lequel au moins une fenêtre (7) est située sur un deuxième côté (22) du corps en forme de boîte (2) ; ledit deuxième côté (22) étant opposé au premier côté (21) sur lequel la tablette (5) est appliquée.

10. Récipient (1) selon la revendication 1, **caractérisé en ce qu'**il comprend également au moins une fenêtre (7), obtenue sur la paroi périmétrale (4) et la traversant pour définir une zone d'accès entre l'intérieur et l'extérieur du corps en forme de boîte (2), adaptée pour définir des moyens de préhension sur le corps en forme de boîte (2) pour le transporter ou le déplacer ; ladite au moins une fenêtre (7) étant située sur un troisième côté (23) du corps en forme de boîte (2) ; ledit troisième côté (23) étant adjacent au premier côté (21) sur lequel la tablette (5) est appliquée.

11. Récipient (1) selon la revendication 1, dans lequel ladite fente (82) comporte une ouverture principale (82a) surmontée d'une ouverture supérieure (82b) ; ladite ouverture supérieure (82b) pouvant se mettre en prise en appui sur le bec d'un robinet (T).

12. Kit de jardinage (100) du type comprenant :
- un récipient (1) selon l'une quelconque des revendications 1 à 11 ;
- au moins un outil de jardinage (102) se terminant à une extrémité par un raccord de couplage comportant au moins une partie cylindrique (G) ; **caractérisé en ce que** ledit au moins un outil de jardinage (102), lorsqu'il n'est pas utilisé, est couplé audit au moins un renfoncement (6) afin de maintenir ledit au moins un outil de jardinage (102) relié au corps en forme de boîte (2).

13. Kit de jardinage (100) selon la revendication 12, **caractérisé en ce que** ledit au moins un outil de jardinage (102) pouvant s'accoupler et se détacher du renfoncement (6) respectif suite à une force de poussée (I) ou de traction (O) correspondante appliquée par un opérateur sur l'outil de jardinage (102) ; ladite force de poussée (I) favorisant une déformation élastique sur la paire de dents (64) adaptée pour permettre un éloignement temporaire de la paire de dents (64) afin de permettre l'entrée de la partie cylindrique (G) à l'intérieur de l'espace libre (60) et l'accouplement ultérieur de l'outil de jardinage (102) à l'intérieur du renfoncement (6) ; ladite force de traction (O) favorisant une déformation élastique sur la paire de dents (64) adaptée pour permettre un éloignement temporaire de la paire de dents (64) afin de permettre la sortie de la partie cylindrique (G) de l'extérieur de l'espace libre (60) et le détachement subséquent de l'outil de jardinage (102) à l'extérieur du renfoncement (6).

14. Kit de jardinage (100) selon la revendication 12, **caractérisé en ce qu'**il comprend également un tuyau d'irrigation flexible (101), stocké au moins partiellement, lorsqu'il n'est pas utilisé, dans une configuration enroulée dans le compartiment (V) défini à l'intérieur du corps en forme de boîte (2).

15. Kit de jardinage (100) selon la revendication 14, **caractérisé en ce que** ledit tuyau d'irrigation (101) peut comporter une partie cylindrique (G) à une extrémité qui peut être couplée à l'intérieur d'un renfoncement (6) de manière à rendre ladite extrémité utilisable pour faciliter la récupération et le raccordement ultérieur de celle-ci à une source de liquides d'alimentation.
